Europäisches Patentamt

European Patent Office

Office européen des brevets

(11) Veröffentlichungsnummer: **0 283 980 B1**

# EUROPÄISCHE PATENTSCHRIFT

(45) Veröffentlichungstag der Patentschrift: **27.11.91**

(51) Int. Cl.⁵: **E21B 4/02**, F16C 17/06

(21) Anmeldenummer: **88104439.0**

(22) Anmeldetag: **19.03.88**

(54) Meisseldirektantrieb für Tiefbohrwerkzeuge.

(30) Priorität: 25.03.87 DE 3709840

(43) Veröffentlichungstag der Anmeldung:
28.09.88 Patentblatt 88/39

(45) Bekanntmachung des Hinweises auf die
Patenterteilung:
27.11.91 Patentblatt 91/48

(84) Benannte Vertragsstaaten:
**BE FR GB NL**

(56) Entgegenhaltungen:
FR-A- 2 544 032
US-A- 3 858 668
US-A- 4 227 752
US-A- 4 542 995

(73) Patentinhaber: **Eastman Christensen Company**
**365 Bugatti Street**
**Salt Lake City Utah 84126(US)**

(72) Erfinder: **Krüger, Volker, Dr.-Ing.**
**Sassengarten 8**
**W-3100 Celle(DE)**
Erfinder: **Daenicke, Heinrich, Dipl.-Ing.**
**Sandlinger Kirchweg 10**
**W-3101 Wienhausen(DE)**

(74) Vertreter: **Busse & Busse Patentanwälte**
**Postfach 1226 Grosshandelsring 6**
**W-4500 Osnabrück(DE)**

**Beschreibung**

Die Erfindung bezieht sich auf einen Meißeldirektantrieb für Tiefborhwerkzeuge nach dem Oberbegriff des Patentanspruchs 1.

Bei einem bekannten Meißeldirektantrieb dieser Art (DE-PS 35 13 124) sind die Lagersegmente jeweils am freien Ende eines Biegebalkens angeordnet, der Bestandteil des Tragringes ist. Eine derartige Axiallagerkonstruktion ist besonders verschleißarm, da durch die Kippbarkeit der Lagersegmente die Bildung eines in Drehrichtung des Lagerringes relativ zu den Lagersegmenten konvergierenden Spaltes ermöglicht wird, in welchem die Bohrspülung einen Schmierfilm aufbaut. Die Biegebalken sind auch geeignet, sehr hohe Belastungen aufzunehmen, haben jedoch nur einen geringen Betriebsfederweg und vermitteln dem Axiallager daher nur einen geringen Toleranzausgleich je Spurring/Tragring-Paarung. In Fällen, in denen ein verhältnismäßig großer Toleranzausgleich durch das Axiallager erforderlich ist, muß das Axiallager eine Vielzahl von Spurring/Tragring-Paarungen umfassen, was mit hohen Kosten und auch einer erheblichen Baugröße des Axiallagers einhergeht. Wird statt dessen ein günstiger Toleranzausgleich durch Veränderung der Federcharakteristik und demzufolge des Betriebsfederweges herbeigeführt, so mindert sich die Belastbarkeit des Axiallagers ebenso wie dessen Standfestigkeit, da der Auslenkwinkel größer und dadurch die wirksame lastübertragende Gleiteingriffsfläche zwischen dem Spurring und den Lagersegmenten kleiner wird.

Der Erfindung liegt die Aufgabe zugrunde, einen Meißeldirektantrieb mit einem insbesondere für sehr hohe axiale Belastungen geeigneten Axiallager zu schaffen, das unter Aufrechterhaltung gleicher Balastungsverhältnisse im Lager einen höheren Toleranzausgleich erbringt, günstig herstellbar, sowie einfach an unterschiedliche Anforderungen anpaßbar ist.

Diese Aufgabe wird bei einem Meißeldirektantrieb der gattungsgemäßen Art durch die kennzeichnenden Merkmale des Patentanspruchs 1 gelöst. Hinsichtlich wesentlicher weiterer Ausgestaltungen wird auf die Patentansprüche 2 bis 19 verwiesen.

Das Axiallager des erfindungsgemäßen Meißeldirektantriebs erlaubt unter Aufrechterhaltung der Kippbarkeit des Gleitkörpers zur Bildung eines Schmierspaltes und damit eines verschleißgünstigen Betriebsverlaufs dem Gleitkörper Axialverlagerungen mit weitaus größerem Betriebsfederweg, so daß das Lager einen hohen Toleranzausgleich erbringt. Durch einfache Längen- bzw. Querschnittsbemessung des Druckfederstabes kann dabei dessen Federcharakteristik verändert werden, wodurch das Axiallager mit einfachen Mitteln an veränderte Anforderungen anpaßbar ist. Bei hoher Belastbarkeit des Axiallagers sichern die Druckfederstäbe der Lagersegmente eine Axialverlagerung unabhängig von Kippverlagerungen, so daß keine Veränderungen der lastübertragenden Flächen und damit der Belastungsverhältnisse auftreten. Trotz der relativen Länge der Druckfederstäbe baut das erfindungsgemäße Axiallager kompakt, da in der Regel die Belastbarkeit und das Toleranzausgleichsvermögen des erfindungsgemäßen Axiallagers der Notwendigkeit enthebt, mehrere Spurring/Tragring-Paarungen axial hintereinanderzuordnen.

Eine besonders elegante Möglichkeit zur Verringerung der axialen Baugröße erbringt eine Ausgestaltung, bei der sich der Druckfederstab in einer Zugrohrfeder abstützt, die sich in weiterer Ausgestaltung ihrerseits noch einmal in einer Druckrohrfeder abstützen kann. Diese gewissermaßen teleskopische Federkombination ermöglicht nicht nur die Verringerung der axialen Baugröße des Tragringes, sondern auch eine Veränderung der Federcharakteristik der Abstützung der Gleitkörper der Lagersegmente, z.B. die Erzielung eines größeren Betriebsfederweges.

Weitere Einzelheiten und Vorteile ergeben sich aus der nachfolgenden Beschreibung und der Zeichnung, in der zwei Ausführungsbeispiele des Gegenstands der Erfindung schematisch näher veranschaulicht sind. In der Zeichnung zeigen:

Fig. 1     als Prinzipdarstellung einen abgebrochenen Längsschnitt durch einen Meißeldirektantrieb nach der Erfindung,

Fig. 2     einen Halbschnitt nach der Linie II-II in Fig. 1 und 3,

Fig. 3     einen Schnitt nach der Linie III-III in Fig. 2, und

Fig. 4     einen Axialschnitt durch ein Lagersegment abgeänderter Ausführung in abgebrochener Einzeldarstellung.

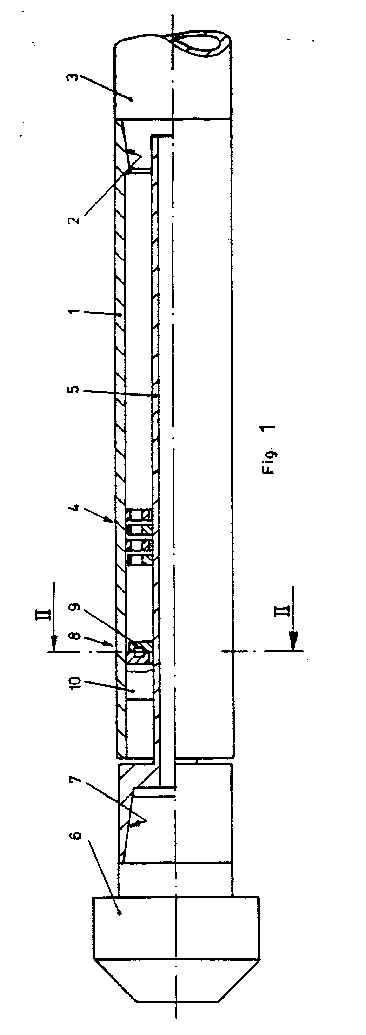

Der in Fig. 1 dargestellte Meißeldirektantrieb umfaßt ein rohrförmiges Gehäuse 1, das über ein Gewinde 2 mit einem Bohrrohrstrang 3 verbindbar ist. Im Innern des Gehäuses 1 ist eine von durchströmender Bohrspülung antreibbare Rotationsmaschine in Gestalt einer Turbine 4 angeordnet, deren Welle 5 axial aus dem Gehäuse 1 austritt und ein Außengewinde 7 für eine Schraubverbindung mit einem Drehbohrmeißel 6 aufweist. Zur Aufnahme der auf die Welle 5 einwirkenden Axialkräfte ist bei dem in Fig. 1 dargestellten Beispiel ein Axiallager 8 vorgesehen, das einen Spurring 9 und einen Tragring 10 umfaßt. Grundsätzlich ist es auch möglich, anstelle eines einzigen Axiallagers 8 auch deren zwei oder mehr axial hintereinander anzuordnen, obgleich die erfindungsgemäße Ausbildung des Axiallagers 8 in der Regel ohne Mehrfachanordnung die bei Meißeldirektantrieben oder sonstigen Tieflochmotoren, zu denen auch nach dem Moineau-Prinzip arbeitenden Verdrängungsmaschinen gehören, auftretenden Belastungen aufnehmen kann.

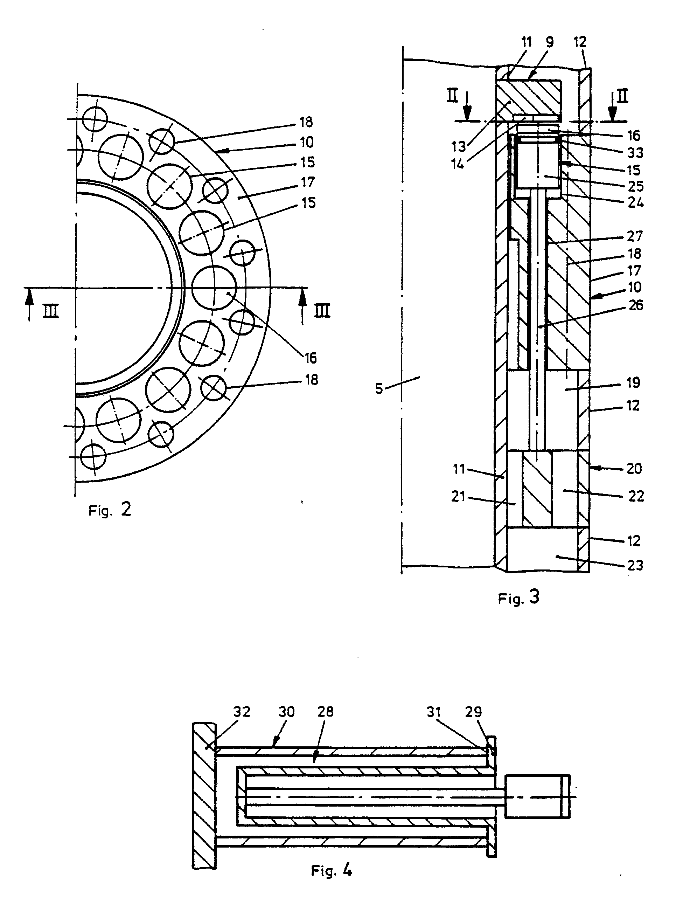

Wie der Fig. 3 näher entnommen werden kann, ist der Spurring 9 auf der Welle 5 abgestützt, und zwar unter Zuhilfenahme von Distanzstücken 11, während der Tragring 10 am Gehäuse ebenfalls unter Zuhilfenahme von Distanzstücken 12 abgestützt ist.

Der Spurring 9 umfaßt im einzelnen einen tragenden Ringkörper 13, z.B. aus Stahl, der auf seiner dem Tragring 10 zugewandten Seite eine Gleitbahn 14 aus hartem, verschleißfestem Material, z.B. aus Sintermetall, Metallkeramik, polykristallinem Diamant und/oder Kombinationen aus solchen Materialien, aufweist, die in Form einer Auflage aufgesintert oder auch von vorgeformten Segmenten gebildet sein kann.

Der in Fig. 2 näher dargestellte Tragring 10 umfaßt eine Mehrzahl von über seinen Umfang regelmäßig verteilt angeordneten Lagersegmenten 15, die jeweils einen gegen die Wirkung einer Rückstellkraft begrenzt kipp- und axialverlagerbar gegenüber dem Tragring 10 abgestützten Gleitkörper 16 umfassen.

Der eigentliche Lagerringkörper 17 weist radial außerhalb der Lagersegmente 15 angeordnete axiale Durchlässe 18 auf, die bei dem in Fig. 2 veranschaulichten Beispiel in einen Ringraum 19 zwischen der Unterseite des Tragrings 17 und der Oberseite eines Widerlagerringes 20 angeordnet ist. Der Widerlagerring 20, auf den weiter unten noch näher eingegangen wird, ist seinerseits mit inneren und äußeren axialen Durchlässen 21,22 in Gestalt von Axialbohrungen versehen, so daß im Ringraum 23 zwischen Welle 5 und Gehäuse 1 ein axialer Durchtritt von Bohrspülung durch das Gleitlager 8 nicht behindert ist.

Wie der Fig. 3 weiter entnommen werden kann, umfaßt jedes Lagersegment 15 einen in einer Axialbohrung 24 des Tragrings 10 aufgenommenen Trägerteil 25, der den Gleitkörper 16 rückseitig unterstützt und z.B. aus Stahl bestehen kann. Eine solche Unterstützung ist insbesondere bei Gleitkörperelementen erwünscht, die ihrerseits eine rückseitige Matrix aus einem harten Sinterwerkstoff und auf ihrer dem Spurring 9 zugewandten Seite eine Schicht aus polykristallinem Diamantwerkstoff aufweisen oder in die Matrix eingelassene bzw. eingesinterte Hartstoff-Formkörper aufweisen.

Der Trägerteil 25 ist an seiner Rückseite von einem mittig angreifenden, axialen, schlanken, geraden Druckfederstab 26 abgestützt, der seinerseits in einer im Durchmesser verringerten Axialbohrung 27 des Tragrings 10 angeordnet und in dieser gegen Ausknicken gesichert ist. Der Druckfederstab 26 besteht bevorzugt aus Titan, das einen hohen Normalspannungswert und dabei einen niedrigen Elastizitätsmodul aufweist, und stützt sich mit seinem dem Trägerteil 25 abgewandten Ende auf einem Widerlager abstützt, das bei dem Beispiel nach Fig. 3 von dem Widerlagerring 20 gebildet ist.

Der Druckfederstab 26 hat, wie dies auch die Abbildung erkennen läßt, einen verhältnismäßig großen Schlankheitsgrad L:D (Länge:Durchmesser), der größer als 10, vorzugsweise größer als 15 sein sollte und beispielsweise bevorzugt bei 17 liegt.

Der bei dem dargestellten Beispiel gesonderte Widerlagerring 20 kann durch Verändern des zwischen diesem und dem Tragring 10 vorgesehenen Distanzstückes 12 leicht in größerem oder kleinerem Abstand zum Tragring 10 Anordnung finden, je nach dem, welche Länge im einzelnen dem Druckfederstab 26 gegeben wird. Grundsätzlich ist es aber auch möglich, für die Abstützung des unteren Endes des Druckfederstabes 26 ein Widerlager vorzusehen, das ein integrales oder gesondertes Teil des Tragringes 10 bildet.

Eine ganz andere Möglichkeit zur Ausgestaltung des Widerlagers veranschaulicht die Fig. 4, bei der das Widerlager die Form eines an seinem unteren Ende geschlossenen, an seinem oberen Ende mit einem radial nach außen vorstehenden Auflageflansch 29 versehenen Rohrkörpers 28 aufweist, der den Druckfederstab 26 koaxial im wesentlichen in ganzer Länge aufnimmt. Dabei weist der Rohrkörper 28 - entgegen der Darstellung in Fig. 4 - bevorzugt einen den Druckfederstab 26 gegen Ausknicken sichernden Innenquerschnitt auf.

Eine solche Ausgestaltung ermöglicht es, den Druckfederstab 26 samt Widerlager 28 als Einsatzteil im Tragring 10 abzustützen, der lediglich mit angepaßten Axialbohrungen zu versehen wäre. Auch diese Ausgestaltung ermöglicht leichte Anpassungen im Falle von sich ändernden Stablängen. Bildet der Rohrkörper 28 jedoch bevorzugtermaßen eine Zugrohrfeder, die z.B. aus rostfreiem Federstahl, aber auch aus Titan, hergestellt sein kann, so bietet diese Ausgestaltung von zwei koaxialen Federn eine bedeutsame Möglichkeit zur Verringerung der Bauhöhe der Lagersegmente 15 bei gleichen Federungseigenschaften oder zur Veränderung der Federungseigenschaften, z.B. im Sinne der Vergrößerung des Betriebsfederweges bzw. zur Herabsetzung der Federhärte.

Der Rohrkörper 28 kann dabei, wie dies der Fig. 4 ebenfalls entnommen werden kann, in weiterer Ausgestaltung des Gleitlagers 8 in einem diesen koaxial im wesentlichen in ganzer Länge aufnehmenden weiteren Rohrköper 30 angeordnet, und zwar mittels des Auflageflansches 29 auf dem oberen Rand 31 des weiteren Rohrkörpers 30 hängend abgestützt sein. Dieser weitere Rohrkörper 30 bildet bevorzugt eine Druckrohrfeder und kann aus rostfreiem Federstahl, Titan od.dgl., bestehen. Die Druckrohrfeder 30 ist auf einem tragringseitigen oder gesonderten Widerlager abgestützt, das in Fig. 4 als Ringscheibenkörper 32 dargestellt ist, jedoch auch vom Boden einer axialen Sacklochbohrung im Tragring 10 gebildet sein kann.

Um zu verhindern, daß die Axialbohrungen 24,27 von Bohrspülung durchströmt werden und sich Ablagerungen bilden, die Kipp- bzw. Axialverlagerungen der Lagersegmente 15 entgegenwirken, ist vorgesehen, daß der Trägerteil 25 der Lagersegmente 15 im Bereich seines oberen Endes gegenüber der Axialbohrung 24 durch einen Dichtungsring 33, insbesondere einen O-Ring, abgedichtet ist.

**Patentansprüche**

1. Meißeldirektantrieb für Tiefbohrwerkzeuge, mit einem rohrförmigen Gehäuse (1), einer darin angeordneten, von durchströmender Bohrspülung antreibbaren Rotationsmaschine (4), einer mit dieser und einem Drehbohrmeißel (6) verbundenen, radial gelagerten Welle (5) und mit zumindest einem der Bohrspülung ausgesetzten Gleitlager (8) zur Axiallagerung der Welle (5), das wenigstens einen an der Welle (5) abgestützten Spurring (9) sowie wenigstens einen jeweils mit einem Spurring (9) zusammenwirkenden, am Gehäuse (1) abgestützten Tragring (10) umfaßt, der eine Mehrzahl von über seinen Umfang regelmäßig verteilt angeordneten Lagersegmenten (15) aufweist, die einen gegen die Wirkung einer Rückstellkraft begrenzt kipp- und axialverlagerbar gegenüber dem Tragring (10) abgestützten Gleitkörper (16) umfassen, dadurch gekennzeichnet, daß jedes Lagersegment (15) einen in einer Axialbohrung (24) des Tragrings (10) aufgenommenen Trägerteil (25) und einen diesen rückseitig mittig abstützenden axialen, schlanken, geraden Druckfederstab (26) umfaßt, der seinerseits in einer im Durchmesser verringerten Axialbohrung(27) des Tragrings (10) angeordnet und in dieser gegen Ausknicken gesichert ist, und der sich mit seinem dem Trägerteil (25) abgewandten Ende auf einem Widerlager abstützt.

2. Meißeldirektantrieb nach Anspruch 1, dadurch gekennzeichnet, daß der Druckfederstab (26) einen Schlankheitsgrad L:D größer 10, insbesondere größer 15, aufweist.

3. Meißeldirektantrieb nach Anspruch 1 oder 2, dadurch gekennzeichnet, daß der Druckfederstab (26) aus Titan besteht.

4. Meißeldirektantrieb nach einem der Ansprüche 1 bis 3, dadurch gekennzeichnet, daß das Widerlager ein integrales oder gesondertes Teil des Tragringes (10) ist.

5. Meißeldirektantrieb nach einem der Ansprüche 1 bis 3, dadurch gekennzeichnet, daß das Widerlager von einem gesonderten Widerlagerring (20) gebildet ist.

6. Meißeldirektantrieb nach Anspruch 5, dadurch gekennzeichnet, daß der Widerlagerring (20) über ein Distanzstück (12) im Abstand unterhalb des Tragringes (10) am Gehäuse (1) abgestützt ist.

7. Meißeldirektantrieb nach einem der Ansprüche 1 bis 4, dadurch gekennzeichnet, daß das Widerlager die Form eines an einem unteren Ende geschlossenen, an seinem oberen Ende mit einem radial nach außen vorstehenden Auflageflansch (29) versehenen Rohrkörpers (28) aufweist, der den Druckfederstab (26) koaxial im wesentlichen in ganzer Länge aufnimmt.

8. Meißeldirektantrieb nach Anspruch 7, dadurch gekennzeichnet, daß der Rohrkörper (28) einen den Druckfederstab (26) gegen Ausknicken sichernden Innenquerschnitt aufweist.

9. Meißeldirektantrieb nach Anspruch 7 oder 8, dadurch gekennzeichnet, daß der Rohrkörper (28) als Zugrohrfeder ausgebildet ist.

10. Meißeldirektantrieb nach Anspruch 9, dadurch gekennzeichnet, daß die Zugrohrfeder (28) aus rostfreiem Federstahl besteht.

11. Meißeldirektantrieb nach einem der Ansprüche 7 bis 10, dadurch gekennzeichnet, daß der Rohrkörper (28) in einer Axialbohrung des Tragrings (10) aufgenommen und an diesem axial dehnbar abgestützt ist.

12. Meißeldirektantrieb nach einem der Ansprüche 7 bis 10, dadurch gekennzeichnet, daß der Rohrkörper (28) in einem diesen koaxial im wesentlichen in ganzer Länge aufnehmenden weiteren Rohrkörper (30) mittels seines Auflageflansches (29) auf dem oberen Rand (31) des weiteren Rohrkörpers (30) hängend abgestützt ist.

13. Meißeldirektantrieb nach Anspruch 12, dadurch gekennzeichnet, daß der weitere Rohrkörper (30) eine Druckrohrfeder bildet.

14. Meißeldirektantrieb nach Anspruch 13, dadurch gekennzeichnet, daß die Druckrohrfeder (30) aus rostfreiem Federstahl besteht.

**15.** Meißeldirektantrieb nach einem der Ansprüche 12 bis 14, dadurch gekennzeichnet, daß die Druckrohrfeder (30) auf einem tragringseitigen oder gesonderten Widerlager, z.B. einer Ringscheibe (32), abgestützt ist.

**16.** Meißeldirektantrieb nach einem der Ansprüche 1 bis 15, dadurch gekennzeichnet, daß der Tragring mit axialen Durchlässen (18) für die Bohrspülung versehen ist.

**17.** Meißeldirektantrieb nach einem der Ansprüche 1 bis 16, dadurch gekennzeichnet, daß der gesonderte Widerlagerring (20) mit axialen Durchlässen (21,22) für Bohrspülung versehen ist.

**18.** Meißeldirektantrieb nach einem der Ansprüche 1 bis 17, dadurch gekennzeichnet, daß die die Lagersegmente (15) aufnehmenden Axialbohrungen im Tragring (10) als Durchgangsbohrungen ausgebildet sind.

**19.** Meißeldirektantrieb nach Anspruch 18, dadurch gekennzeichnet, daß der Trägerteil (25) der Lagersegmente (15) im Bereich seines oberen Endes gegenüber der Axialbohrung (24) durch einen Dichtungsring (33) abgedichtet ist.

## Claims

**1.** A direct bit drive for deep-drilling tools, with a tubular casing (1) in which there is disposed a rotary machine (4) adapted to be driven by through-flowing drilling fluid, a radially mounted shaft connected to the rotary machine and to a drill bit (6) and with, exposed to the drilling fluid, at least one plane bearing (8) for axial mounting of the shaft (5) and comprising, supported on the shaft (5), at least one tracking ring (9) as well as at least one supporting ring (10) braced on the housing (1) and cooperating in each case with a tracking ring (9) and which has distributed regularly over its periphery, a plurality of bearing segments (15) which comprise a sliding body (16) biased against the action of a restoring force for limited tilting and axial displacement in respect of the supporting ring (10), characterised in that each bearing segment (15) comprises, accommodated in an axial bore (24) in the supporting ring (10), a carrier part (25) and an axial slender and straight pressure spring bar (26) centrally braced against the back of the carrier part (25), the said pressure spring bar (26) being in turn disposed in a reduced diameter axial bore (27) in the supporting ring (10) being secured therein in such a way that it cannot be outwardly deflected, its end remote from the carrier part (25) being braced against an abutment.

**2.** A direct bit drive according to Claim 1, characterised in that the pressure spring bar (26) has a degree of slenderness L:D greater than 10 and in particular greater than 15.

**3.** A direct bit drive according to Claim 1 or 2, characterised in that the pressure spring bar (26) consists of titanium.

**4.** A direct bit drive according to one of Claims 1 to 3, characterised in that the abutment is an integral or separate part of the supporting ring (10).

**5.** A direct bit drive according to one of Claims 1 to 3, characterised in that the abutment consists of a separate abutment ring (20).

**6.** A direct bit drive according to Claim 5, characterised in that the abutment ring (20) is braced on the casing (1) at a distance from and below the supporting ring (10) via a spacing member (12).

**7.** A direct bit drive according to one of Claims 1 to 4, characterised in that the abutment takes the form of a tubular body (28) closed at its bottom end and provided at its top end with a radially outwardly projecting supporting flange (29) and coaxially accommodates virtually the entire length of the pressure spring bar (26).

**8.** A direct bit drive according to Claim 7, characterised in that the tubular body (28) has an internal cross-section which safeguards the pressure spring bar (26) against outwards deflection.

**9.** A direct bit drive according to Claim 7 or 8, characterised in that the tubular body (28) is constructed as a tubular traction spring.

**10.** A direct bit drive according to Claim 9, characterised in that the tubular traction spring (28) consists of stainless spring steel.

**11.** A direct bit drive according to one of Claims 7 to 10, characterised in that the tubular body (28) is accommodated in an axial bore in the supporting ring (10) on which it is axially supported in an extensible manner.

**12.** A direct bit drive according to one of Claims 7 to 10, characterised in that the tubular body (28) is supported in a further tubular body (30) which accommodates it coaxially over substantially its entire length, by means of its supporting flange (29) which is suspended from the top edge (31) of the further tubular body (30).

13. A direct bit drive according to Claim 12, characterised in that the further tubular body (30) forms a tubular thrust spring.

14. A direct bit drive according to Claim 13, characterised in that the tubular thrust spring (30) consists of stainless spring steel.

15. A direct bit drive according to one of Claims 12 to 14, characterised in that the tubular thrust spring (30) is supported on an abutment, e.g. an annular disc (32) which is on the same side as the supporting ring or which may be separate.

16. A direct bit drive according to one of Claims 1 to 15, characterised in that the supporting ring is provided with axial passages (18) to accommodate the drilling fluid.

17. A direct bit drive according to one of Claims 1 to 16, characterised in that the separate abutment ring (20) is provided with axial passages (21, 22) for drilling fluid.

18. A direct bit drive according to one of Claims 1 to 17, characterised in that the axial bores in the supporting ring (10) which accommodate the bearing segments (15) are constructed as through-bores.

19. A direct bit drive according to Claim 18, characterised in that the carrier part (25) of the bearing segments (15) is in the region of its top end sealed in respect of the axial bore (24) by a sealing ring (33).

**Revendications**

1. Entraînement direct de trépan pour outils de forage profond, comportant un fût tubulaire (1), une machine de rotation (4) disposée dans le fût et pouvant être entraînée par la boue de forage qui la traverse, un arbre (5) monté radialement à rotation et relié à cette machine et à un trépan de forage rotatif (6) et au moins un palier à glissement (8) exposé à la boue de forage et assurant le montage à rotation axial de l'arbre (5), qui comporte au moins un anneau mobile (9) monté sur l'arbre (5) et au moins un anneau de support (10) monté sur le fût (1) et coopérant chaque fois avec un anneau mobile (9), qui comporte un grand nombre de segments de palier (15), régulièrement répartis sur sa périphérie, comprenant une pièce de glissement (16) montée de façon à pouvoir se déplacer axialement et osciller de manière limitée à l'encontre d'une force de rappel par rapport à l'anneau de support (10), caractérisé en ce que chaque segment de palier (15) comprend une pièce de support (25) logée dans un alésage axial (24) de l'anneau de support (10) et une tige de ressort de pression (26) droite, allongée, axiale, qui prend appui au centre de la face arrière de la pièce de support, qui est disposée dans un alésage axial (27) de diamètre réduit de l'anneau de support (10) et y est protégée contre tout flambage, et qui, par son extrémité opposée à la pièce de support (25), porte contre un appui.

2. Entraînement direct de trépan suivant la revendication 1, caractérisé en ce que la tige de ressort de pression (26) présente un rapport d'allongement L:D supérieur à 10, de préférence supérieur à 15.

3. Entraînement direct de trépan suivant la revendication 1 ou 2, caractérisé en ce que la tige de ressort de pression (26) est en titane.

4. Entraînement direct de trépan suivant l'une quelconque des revendications 1 à 3, caractérisé en ce que l'appui fait partie intégrante de l'anneau de support (10) ou est séparé de celui-ci.

5. Entraînement direct de trépan suivant l'une quelconque des revendications 1 à 3, caractérisé en ce que l'appui est formé par un anneau d'appui (20) séparé.

6. Entraînement direct de trépan suivant la revendication 5, caractérisé en ce que l'anneau d'appui (20) est monté sur le fût (1) à une certaine distance en dessous de l'anneau de support (10) par l'intermédiaire d'une pièce d'entretoisement (12).

7. Entraînement direct de trépan suivant l'une quelconque des revendications 1 à 4, caractérisé en ce que l'appui a la forme d'un corps tubulaire (28) fermé à son extrémité inférieure et pourvu, à son extrémité supérieure, d'une bride d'appui (29) faisant saillie vers l'extérieur, qui reçoit la tige de ressort de pression (26), coaxialement, en substance sur la totalité de sa longueur.

8. Entraînement direct de trépan suivant la revendication 7, caractérisé en ce que le corps tubulaire (28) présente une section transversale interne protégeant la tige de ressort de pression (26) contre tout flambage.

9. Entraînement direct de trépan suivant la revendication 7 ou 8, caractérisé en ce que le corps tubulaire (28) a la forme d'un ressort tubulaire de traction.

10. Entraînement direct de trépan suivant la revendication 9, caractérisé en ce que le ressort tubulaire de traction (28) est en acier de ressort inoxydable.

11. Entraînement direct de trépan suivant l'une quelconque des revendications 7 à 10, caractérisé en ce que le corps tubulaire (28) est logé dans un alésage axial de l'anneau de support (10) et est monté axialement dilatable sur celui-ci.

12. Entraînement direct de trépan suivant l'une quelconque des revendications 7 à 10, caractérisé en ce que le corps tubulaire (28) est monté suspendu dans un autre corps tubulaire (30) recevant ce corps (28) coaxialement en substance sur toute sa longueur, au moyen de sa bride d'appui (29) sur le bord supérieur (31) de cet autre corps tubulaire (30).

13. Entraînement direct de trépan suivant la revendication 12, caractérisé en ce que l'autre corps tubulaire (30) forme un ressort tubulaire de pression.

14. Entraînement direct de trépan suivant la revendication 13, caractérisé en ce que le ressort tubulaire de pression (30) est en acier de ressort inoxydable.

15. Entraînement direct de trépan suivant l'une quelconque des revendications précédentes, caractérisé en ce que le ressort tubulaire de pression (30) est monté sur un appui situé du côté de l'anneau de support ou séparé, par exemple sur un disque annulaire (32).

16. Entraînement direct de trépan suivant l'une quelconque des revendications 1 à 15, caractérisé en ce que l'anneau de support est pourvu de passages axiaux (18) pour la boue de forage.

17. Entraînement direct de trépan suivant l'une quelconque des revendications 1 à 16, caractérisé en ce que l'anneau d'appui séparé (20) est pourvu de passages axiaux (21, 22) pour la boue de forage.

18. Entraînement direct de trépan suivant l'une quelconque des revendications 1 à 17, caractérisé en ce que les alésages axiaux dans l'anneau de support (10) recevant les segments de palier (15) ont la forme d'alésages de traversée.

19. Entraînement direct de trépan suivant la revendication 18, caractérisé en ce que la pièce de support (25) des segments de palier (15) est isolée de manière étanche de l'alésage axial (24) par un anneau d'étanchéité (33) dans la zone de son extrémité supérieure.

Fig. 1

Fig. 2

Fig. 3

Fig. 4